# EUROPEAN PATENT SPECIFICATION

(11) **EP 0 807 046 B1**
(45) Date of publication and mention of the grant of the patent: **19.08.1998**
(21) Application number: 96900417.5
(22) Date of filing: 29.01.1996
(51) Int. Cl.: B62B 3/00

(54) **A GOODS CONTAINER**
WARENBEHÄLTER
CONTENEUR POUR MARCHANDISES

(30) Priority: 31.01.1995 GB 9501880
(43) Date of publication of application: 19.11.1997
(73) Proprietor: Elpi Roll Containers Oy, 04400 Järvenpää (FI)
(72) Inventor: MATONIEMI, Markku, FIN-04400 Järvenpää (FI)
(74) Representative: Burrows, Anthony Gregory
(86) International application number: IB9600080
(87) International publication number: WO9623688

(56) References cited:
- DE-C- 94 970
- GB-A- J14 713
- GB-A- J20 976
- GB-A- 2 259 485
- NL-A- 8 501 404

## Description

According to one aspect of the present invention, there is provided a goods container including an elongate, first member formed with an external recess therealong to provide a guiding channel, a second member extending in said recess, whereby relative movement between said first member and said second member is guided, at least one of the first and second members being tubular, a latch comprising a spring and effective between the first and second members to obstruct relative, guided movement between said first and second members in one sense, said latch extending through a hole through the wall of said one of the first and second members, and a detent provided on the other of said first and second members for co-operating with said latch, characterized in that said spring is housed in the hollow interior of said one of the first and second members.

Owing to this aspect of the present invention, the latching system can be more reliable, more hygienic, less obtrusive and less expensive than if the latch, particularly the spring, were to be located externally of both of the first and second members.

The latch, particularly the spring, is preferably provided in the first member and the latch extends through the wall of the guiding channel. Advantageously, the portion of the latch protruding into the guiding recess is a section of the spring itself, the latch thus consisting solely of the spring, which is a more durable construction than if the latch were to include a separate latching member attached to the spring. The latch is advantageously of a shape substantially matching a non-circular internal cross-section of the tubular member, so that the latch is retained in position in two perpendicular directions in the plane of the cross-section of the tubular member, so that no separate anchoring means is necessary to prevent movement of the latch in that plane. Similarly, the latch is advantageously retained against movement along the tubular member, by that part of the latch which extends through the hole abutting against the surface portions of the hole. Again, this avoids the need for a specific anchoring device to prevent unwanted movement of the latch along the tubular member.

Advantageously, the elongate, first member is a vertical part of the frame of the goods container, whilst the second member is a vertical part of a vertically displaceable gate of the goods container.

According to a second aspect of the present invention, there is provided a goods container including an elongate member, a transverse notch in the exterior of said elongate member, an elongate part which resiliently engages releasably in said notch and extends transversely of said elongate member, and supporting means beyond said notch and supporting said elongate part, the arrangement being such that relative movement between said supporting means and said elongate member longitudinally of said elongate member can force said elongate part resiliently out of said notch, characterized in that said supporting means supports said elongate part at respective opposite ends of said elongate part.

Owing to this aspect of the invention, it is possible to make the latching system provided by the elongate part and the notch more durable and less expensive. In particular, because the elongate part is supported at its respective opposite end zones, it can be thinner than if it were to be supported at only one end zone, so that the notch can be more shallow, so that less force is required to force the elongate part out of the notch, with reduced risk of damage to the latching system, and with reduced risk of significant distortion or significant weakening of the elongate member during provision of the notch.

Advantageously, the elongate part is a section of a spring. Preferably, the supporting means may be respective surface portions of a hole formed through a guide channel serving to guide said elongate member longitudinally of itself, the spring extending through the hole into the recess of the channel.

In order that the invention may be clearly understood and readily carried into effect, reference will now be made, by way of example, to the accompanying drawings, in which:-
Figure 1 shows a rear perspective view of a shelved, nestable, roll container,
Figure 2 shows a plan view of a vertical, guiding profile of a frame of the roll container,
Figure 3 is a fragmentary, side elevation of a known latching system for the roll container,
Figure 4 is a view similar to Figure 3, but of a latching system constituting an embodiment of the present invention,
Figure 5 shows a rear elevation of the latching system, and
Figure 6 shows an opposite side elevation of the vertical profile for the latching system of Figures 4 and 5.

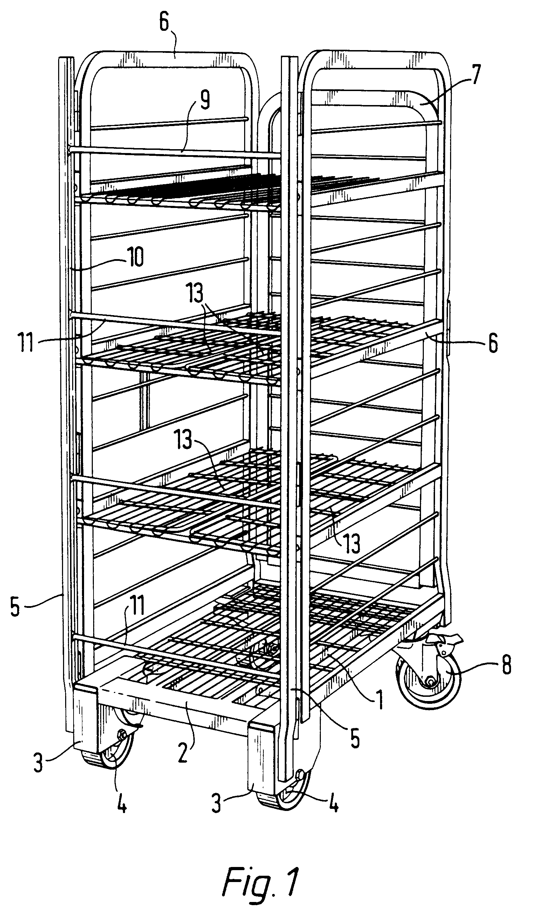

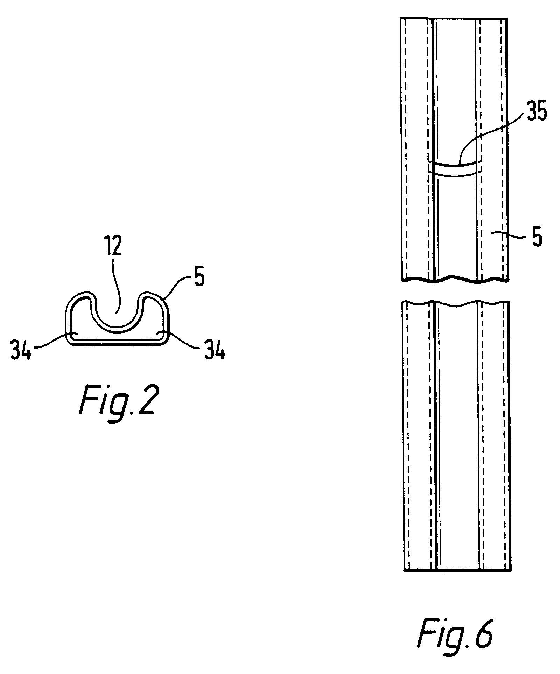

Referring to Figure 1, the roll container comprises a base 1 hinged at its rear to a horizontal, tubular cross-bar 2 welded at its ends to respective rear wheel boxes 3 in which are mounted respective rear wheels 4. Welded at their lower ends to the respective wheel boxes 3 are respective vertical, tubular profiles 5. Vertical, lateral walls 6 are hinged at their rear edges to the respective profiles 5 for turning about vertical axes. A front gate 7 is hinged at one of its vertical edges to the front vertical edge of one of the lateral walls 6 and is latchable to the vertical edge of the other lateral wall 6. Mounted on the respective lower, front corners of the lateral walls 6 are castor wheels 8. At the rear of the roll container is a vertically displaceable gate 9. The gate 9 includes two vertical lateral rods of which one is seen and referenced 10, and four horizontal rods 11. The items 10 and 11 may be tubes instead of rods. The vertical rods 10 are guided in U-section recesses 12 (see Figure 2) in the exteriors of the profiles 5, thereby providing respective guide channels therein. Arranged at regular intervals above the base 1 are respective pairs of horizontal shelves 13, the two shelves of each pair being hinged to the respective lateral walls 6 so as to be turnable about respective horizontal axes from the respective horizontal positions shown in Figure 1 into upwardly-raised vertical positions (not shown) Goods, for example cartons filled with milk or orange juice, are transported in the roll container while the roll container is in the condition shown in Figure 1, in which the gate 9 is in its lowermost condition and the horizontal rods 11 are located a desired distance above the respective base 1 and shelves 13, to prevent the goods from falling rearwardly from the base and the shelves. However, previously, during, the loading of the goods onto the base 1 and the shelves 13, the gate 9 would have occupied a raised condition in which the lower three of the four horizontal rods 11 would have been positioned in the respective horizontal planes of the pairs of shelves 13. To retain the gate 9 in that position during loading, a releasable latching system is provided at one or each of the vertical edges of the gate 9.

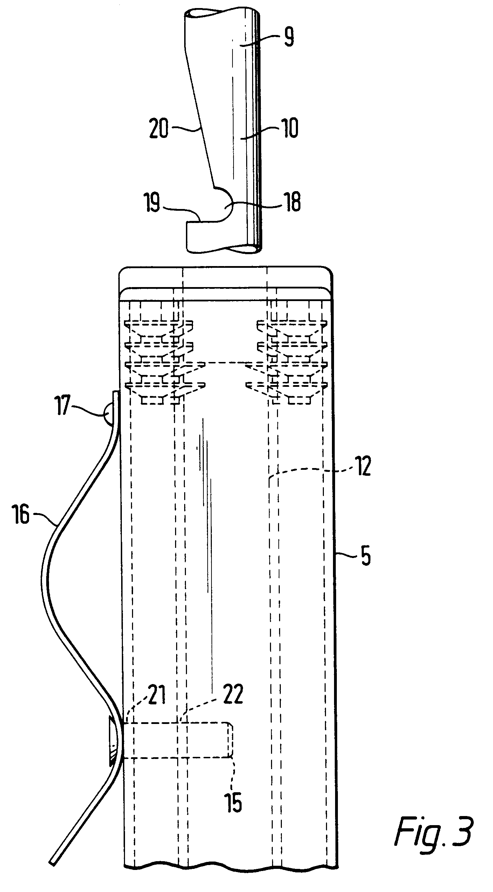

A known such latching system of a kind disclosed in GB-A-2259485 is shown in the present Figure 3 and includes a latch consisting of a horizontal pin 15 and a leafspring 16 in the form of a double bow. The two ends of the leafspring 16 (of which only one end is shown) are attached by rivets 17 to the front wall of the profile 5. The pin 15 may also be attached to the spring 16 by riveting. The pin 15 releasably engages resiliently in a notch 18 pressed into the external surface of the rod 10. The notch 18 extends in depth to about half of the diameter of the rod 10 and has a substantially horizontal lower wall 19 and an oblique upper wall 20 at an angle approaching the vertical. Although in Figure 3 the wall 19 is shown above the pin 15, for clarity of drawing, in practice the wall 19 is always below the pin 15, except upon the rare occasion when the whole of the rear gate 9 has to be removed from the roll container. In use, when the goods are to be loaded onto the base 1 and the shelves 13, the rear gate 9 is raised from its lowermost position until the pin 15 enters the deepest part of the notch 18, the wall 19 abutting the pin 15 to prevent further raising of the gate 9. After loading of the goods, the gate 9 is forced downwards, to force the pin 15 out of the deepest part of the notch 18 and, by means of the oblique wall 20, to cam it outwards until the cylindrical surface of the rod 10 reaches it and the pin 15 thereby occupies its outermost position in which it is urged by the spring 16 against that cylindrical surface. The assembly and installation of the latch 15,16 requires the pin 15 to be rivetted to the spring 16 and then the ends of the spring 16 to be rivetted by the rivets 17 to the profile 5. Moreover, bores 21 and 22 have to be formed through both the outer and inner walls of the profile 5, to allow access for the pin 15 to the guide recess 12. In order to prevent bending of the pin 15, it is of a relatively large diameter, for example 5mm. Moreover, in order to ensure relatively reliable gate-stopping abutment of the wall 19 against the pin 15, and also reliable retention of the gate 9 in its raised position by the pin 15 under the action of the spring 16, the notch 18 has to be pressed relatively deeply into the rod 10, with a significant risk of bending and/or widening of the rod 10, with the result that it will not run smoothly in the profile 5. The arrangement of the latch 15,16 partly outside the profile 5 means that it is exposed to damage and that its own region is difficult to clean. Moreover, the point of fixing of the pin 15 to the spring 16 is a weakness, such that there is a risk of the pin 15 becoming detached from the spring, with a resultant risk of damage to the roll container and the goods-loading machinery. Moreover, the depth of penetration of the pin 15 into the exterior of the rod 10 means that considerable downward force is required to force the pin 15 out of the notch 18, with a greater danger of bending of the pin 15 and/or detaching of the pin 15 from the spring 16.

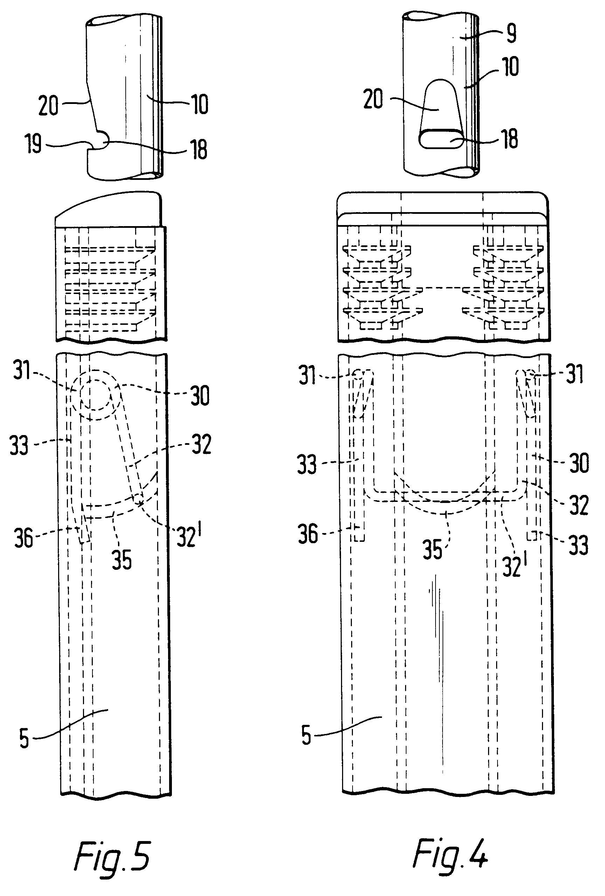

The embodiment to be described with reference to Figures 4 to 6 is intended to avoid or mitigate the problems of the latching system of Figure 3.

The latch of this embodiment consists simply of a particularly shaped coil spring 30 including two co-axial coil sections 31 linked by a U-shaped section 32 and also having respective end arm sections 33 parallel to each other. The spring 30 is of a size and shape such that its sections 31 and 33 fit relatively snugly into the rectangular corners 34 of the profile 5. Formed through that wall of the profile 5 bounding the recess 12, and near the top of the profile 5, is a U-shaped, curved slot 35 through both sides of which the horizontal, central portion 32' of the U-shaped section 32 extends. The spring 30 has a wire diameter of, for example, 1.6mm. A correspondingly shallow notch 18 is pressed into the exterior or the rod 10. To mount the spring 30 in the profile 5, firstly, with the portion 32' of the U-shaped section 32 in approximately the same plane as the arm sections 33, the spring 30 is inserted into the open end of the profile 5, with the arm sections 33 in the respective corners 34 of the profile and the coil sections 31 and the U-shaped section 32 somewhat embracing the guide channel bounding the recess 12. Slightly inwardly turned, free ends 36 of the arm sections 33 facilitate and lead introduction of the spring 30 into the open end of the tubular profile. The spring is pushed along the profile 5 until the portion 32' of its U-shaped section 32 arrives at the slot 35, whereupon it automatically springs into that slot, so that the spring 30 is now anchored in position against movement along the profile 5 and, by means of the arms 33 in the corners 34, against turning about the axis of the profile 5. The portion 32' bears against the cylindrical outer surface of the rod 10. When, preparatory to loading of the roll container, the rod 10 is lifted, as the tube approaches its raised position, the surface 20 slides past the portion 32' and the portion 32' comes to engage in the deepest part of the notch 18, where it comes to abut the wall 19. The housing of the spring 30 in the profile 5 retains the readily cleanable lines of the profile 5 and also protects the spring 30 against damage. Moreover, the support of the portion 32' at both of its ends, by the surfaces of the slot 35, enables the portion 32' to be relatively thin and thus the notch 18 relatively shallow. This has the advantages that there is less risk of bending and/or widening of the rod 10 during forming of the notch 18 and, moreover, less force is required to displace the gate 9 downwards from its raised position, again reducing the risk of damage to the portion 32'.

It will be understood that the latching system of Figures 4 to 6 is provided at either one or each of the lateral sides of the gate 9.

## Claims

1. A goods container including an elongate, first member (5) formed with an external recess (12) therealong to provide a guiding channel, a second member (10) extending in said recess (12), whereby relative movement between said first member (5) and said second member (10) is guided, at least one (5) of the first and second members (5,9) being tubular, a latch (30) comprising a spring (30) and effective between the first and second members (5, 9) to obstruct relative, guided movement between said first and second members (5,9) in one sense, said latch (30) extending through a hole (35) through the wall of said one (5) of the first and second members (5,9), and a detent (19) provided on the other (9) of said first and second members (5,9) for co-operating with said latch (30), characterized in that said spring (30) is housed in the hollow interior of said one (5) of the first and second members (5,9).

2. A container according to claim 1, characterized in that the spring (30) is provided in the first member (5) and the hole (35) is formed through the wall of the guiding channel.

3. A container according to claim 2, characterized in that the portion of the latch (30) protruding into the recess (12) is provided by a section (32') of the spring (30) itself, and the latch (30) consists solely of the spring (30).

4. A container according to claim 2 or 3, characterized in that the portion of the latch (30) protruding into the recess (12) is supported at respective opposite end zones thereof by respective surface portions of said hole (35) against movement along the one member (5).

5. A container according to any preceding claim, characterized in that the latch (30) is of a shape substantially matching a non-circular internal cross-section of the one member (5), so that the latch (30) is retained in position in two perpendicular directions in the plane of the cross-section of the one member (5).

6. A container according to claim 5, wherein said spring (30) is a coil spring (30) comprising two substantially co-axial coil sections (31), a U-shaped section (32) linking the coil sections (31), and respective end arm sections (33) substantially parallel to each other.

7. A container according to any preceding claim, characterized in that the latch (30) is retained against movement along the one member (5), by that part of the latch (30) which extends through the hole (35) abutting against surface portions of the hole (35).

8. A goods container including an elongate member (9), a transverse notch (18) in the exterior of said elongate member (9), an elongate part (32') which resiliently engages releasably in said notch (18) and extends transversely of said elongate member (9), and supporting means (5) beyond said notch (18) and supporting said elongate part (32'), the arrangement being such that relative movement between said supporting means (5) and said elongate member (9) longitudinally of said elongate member (9) can force said elongate part (32') resiliently out of said notch (18), characterized in that said supporting means (5) supports said elongate part (32') at respective opposite ends of said elongate part (32').

9. A goods container according to claim 8, characterized in that said elongate part (32') is a section of a spring (30).

10. A goods container according to claim 8 or 9, characterized in that said supporting means (5) is respective surface portions of a hole (35) formed through a guide channel (5) serving to guide said elongate member (9) longitudinally of itself, said elongate part (32') extending through the hole (35) into the recess (12) of the channel (5).

## Patentansprüche

1. Warencontainer mit einem länglichen ersten Teil (5), das zur Bildung eines Führungskanals mit einer längslaufenden äußeren Ausnehmung (12) versehen ist, einem in der Ausnehmung (12) verlaufenden zweiten Teil (9), wodurch die Relativbewegung zwischen dem ersten Teil (5) und dem zweiten Teil (9) geführt ist, wobei wenigstens eines (5) der ersten und zweiten Teile (5, 9) rohrförmig ist, einer Klinke (30) mit einer Feder (30), die zwischen dem ersten und dem zweiten Teil (5, 9) wirksam ist und die geführte Relativbewegung zwischen dem ersten und dem zweiten Teil (5, 9) in einer Richtung sperrt, wobei sich die Klinke (30) durch ein Loch (35) durch die Wand des einen (5) der ersten und zweiten Teile (5, 9) erstreckt, und mit einer an dem anderen (9) der ersten und zweiten Teile (5, 9) vorgesehenen Arretiereinrichtung (19) zum Zusammenwirken mit der Klinke (30), dadurch gekennzeichnet, daß die Feder (30) im hohlen Inneren des einen (5) der ersten und zweiten Teile (5, 9) vorgesehen ist.

2. Container nach Anspruch 1, dadurch gekennzeichnet, daß die Feder (30) in dem ersten Teil (5) vorgesehen ist und das Loch (35) in der Wand des Führungskanals ausgebildet ist.

3. Container nach Anspruch 2, dadurch gekennzeichnet, daß der Bereich der Klinke (30), der in die Ausnehmung (12) ragt, durch einen Teil (32') der Feder (30) selbst gebildet ist, und die Klinke (30) ausschließlich aus der Feder (30) besteht.

4. Container nach Anspruch 2 oder 3, dadurch gekennzeichnet, daß der in die Ausnehmung (12) ragende Teil der Klinke (30) an seinen jeweiligen gegenüberliegenden Endzonen durch jeweilige Flächenbereiche des Lochs (35) gegen Bewegung entlang dem einen Teil (5) gestützt ist.

5. Container nach einem der vorhergehenden Ansprüche, dadurch gekennzeichnet, daß die Form der Klinke (30) im wesentlichen einem nicht kreisförmigen inneren Querschnitt des einen Teils (5) entspricht, so daß die Klinke (30) in zwei senkrechten Richtungen in der Ebene des Querschnitts des einen Teils (5) in Position gehalten ist.

6. Container nach Anspruch 5, bei dem die Feder (30) eine Schraubenfeder (30) mit zwei im wesentlichen koaxialen Spulenabschnitten (31), einem die Spulenabschnitte (31) verbindenden U-förmigen Abschnitt (32) und jeweiligen im wesentlichen zueinander parallelen End-Armabschnitten (33) ist.

7. Container nach einem der vorhergehenden Ansprüche, dadurch gekennzeichnet, daß die Klinke (30) gegen Bewegung entlang den, einen Teil (5) durch denjenigen Teil der Klinke (30) gehalten ist, der sich durch das Loch (35) erstreckt und an Flächenbereichen des Lochs (35) anliegt.

8. Warencontainer mit einem länglichen Teil (9), einer in der Außenseite des länglichen Teils (9) angebrachten Quernut (18), einem länglichen Teil (32'), das federnd lösbar in die Nut (18) eingreift und quer zum länglichen Teil (9) verläuft, und einer sich über die Nut (18) hinaus erstreckenden Stützeinrichtung (5), die das längliche Teil (32') stützt, wobei die Anordnung derart ausgebildet ist, daß eine in Längsrichtung des länglichen Teils (9) verlaufende Relativbewegung zwischen der Stützeinrichtung (5) und dem länglichen Teil (9) das längliche Teil (32') federnd aus der Nut (18) drückt, dadurch gekennzeichnet, daß die Stützeinrichtung (5) das längliche Teil (32') an jeweiligen gegenüberliegenden Enden des länglichen Teils (32') stützt.

9. Warencontainer nach Anspruch 8, dadurch gekennzeichnet, daß das längliche Teil (32') ein Abschnitt einer Feder (30) ist.

10. Warencontainer nach Anspruch 8 oder 9, dadurch gekennzeichnet, daß die Stützeinrichtung (5) durch jeweilige Flächenbereiche eines Lochs (35) gebildet ist, das in einem Führungskanal (5) ausgebildet ist, der zum Führen des länglichen Teils (9) in Längsrichtung dient, wobei sich das längliche Teil (32') durch das Loch (35) in die Ausnehmung (12) des Kanals (5) erstreckt.

## Revendications

1. Un conteneur pour marchandises comprenant un premier élément allongé (5) présentant un évidement externe (12) longitudinal pour former un canal de guidage, un second élément (10) s'étendant dans ledit évidement (12), de manière à guider un mouvement relatif entre ledit premier élément (5) et ledit second élément (10), au moins l'un (5) des premier et second éléments (5, 9) étant tubulaire, un verrou (30) comprenant un ressort (30) et agissant entre le premier et le second élément (5, 9) pour empêcher le mouvement guidé relatif entre lesdits premier et second éléments (5, 9) dans une direction, ledit verrou (30) passant à travers un trou (35) de la paroi dudit un (5) desdits premier et second éléments (5, 9), et un positionneur (19) prévu sur l'autre (9) desdits premier et second éléments (5, 9) pour coopérer avec ledit verrou (30), caractérisé en ce que ledit ressort (30) est logé dans la partie interne creuse dudit un (5) desdits premier et second éléments (5, 9).

2. Un conteneur selon la revendication 1, caractérisé en ce que le ressort (30) est prévu dans le premier élément (5) et en ce que le trou (35) est formé dans la paroi du canal de guidage.

3. Un conteneur selon la revendication 2, caractérisé en ce que la partie du verrou (30) faisant saillie dans l'évidement (12) est formée par une portion (32') du ressort (30) lui-même, et en ce que le verrou (30) se compose uniquement du ressort (30).

4. Un conteneur selon la revendication 2 ou 3, caractérisé en ce que la partie du verrou (30) faisant saillie dans l'évidement (12) est supportée au niveau de ces zones d'extrémités opposées respectives par des parties de surface respectives dudit trou (35) en s'opposant au mouvement le long de l'un (5) desdits éléments.

5. Un conteneur selon une revendication précédente quelconque, caractérisé en ce que le verrou (30) présente une forme s'adaptant sensiblement à une section transversale interne non circulaire de l'un (5) desdits éléments, de sorte que le verrou (30) est maintenu en place dans deux directions perpendiculaires dans le plan de la section transversale de l'un (5) desdits éléments.

6. Un conteneur selon la revendication 5, dans lequel ledit ressort (30) est un ressort à boudin (30) comprenant deux parties (31) d'enroulement sensiblement coaxial, une partie en forme de U (32) joignant les parties d'enroulement (31), et des parties respectives d'extrémité formant bras (33) sensiblement parallèles l'une à l'autre.

7. Un conteneur selon une revendication précédente quelconque, caractérisé en ce que le verrou (30) est empêché de se déplacer le long de l'un (5) desdits éléments par la partie du verrou (30) qui s'étend à travers le trou (35) en venant en butée contre les parties de surface du trou (35).

8. Un conteneur de marchandises comprenant un élément allongé (9), un cran transversal (18) dans la partie externe dudit élément allongé (9), une partie allongée (32') qui s'engage de manière élastique dans ledit cran (18) et s'étend transversalement audit élément allongé (9), et des moyens de support (5) au-delà dudit cran (18) et supportant ladite partie allongée (32'), la disposition étant telle qu'un mouvement relatif entre lesdits moyen de support (5) et ledit élément allongé (9) longitudinalement audit élément allongé (9) peut amener à force ladite partie allongée (32') à sortir de manière élastique dudit cran (18), caractérisé en ce que ledit moyen de support (5) porte ladite partie allongée (32') au niveau des extrémités opposées respectives de ladite partie allongée (32).

9. Un conteneur pour marchandises selon la revendication 8, caractérisé en ce que ladite partie allongée (32') est une portion d'un ressort (30).

10. Un conteneur pour marchandises selon la revendication 8 ou 9 caractérisé en ce que lesdits moyens de support (5) sont constitués par des parties de surface respectives d'un trou (35) formé à travers un canal de guidage (5) servant à guider ledit élément allongé (9) longitudinalement à lui-même, ladite partie allongée (32') s'étendant à travers le trou (35) dans l'évidement (12) du canal (5).
